# DEMANDE DE BREVET EUROPEEN

(11) **EP 0 582 521 A1**
(43) Date de publication de la demande: **09.02.1994**
(21) Numéro de dépôt: 93402008.2
(22) Date de dépôt: 04.08.1993
(51) Int. Cl.: F23D 14/32, F23D 14/22, F23D 14/76

(54) **Brûleurs oxycombustibles**

(30) Priorité: 06.08.1992 FR 9209778
(71) Demandeur: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Laurenceau, Serge, F-78000 Versailles (FR)
(74) Mandataire: Le Moenner, Gabriel

(57) **Abrégé**

Le brûleur oxycombustible comporte une partie d'extrémité (2) destinée à s'étendre dans une enceinte de combustion et comprenant une structure d'éléments de nez de brûleur (7, 10, 14) en matériaux céramiques assemblés par des moyens de liaison souples (18) sur une structure d'éléments de support métalliques (6, 8, 12), dans le prolongement de ces derniers, l'ensemble de la partie d'extrémité étant entouré par au moins une couche (38) de fibres de céramique.

Applications notamment aux incinérateurs de produits chimiques et aux fours de métallurgie ou de verrerie.

## Description

La présente invention concerne les brûleurs oxycombustibles définissant au moins un premier canal pour le passage d'oxygène et au moins un deuxième canal pour le passage d'un carburant, les premier et deuxième canaux débouchant dans une partie d'extrémité du brûleur destiné à s'étendre dans une enceinte de combustion.

Les brûleurs oxycombustibles connaissent depuis quelque temps un développement rapide, en raison de leurs performances thermiques améliorées et pour le contrôle des émissions d'oxydes d'azote, dans de nombreux domaines, en particulier en chimie, en métallurgie et en verrerie. Les brûleurs oxycombustibles se trouvent toutefois confrontés à des problèmes de tenue à la température, en raison des températures de combustion élevées qu'ils permettent d'atteindre (supérieures à 2300°C) et des températures atteintes dans les procédés industriels associés, auxquels s'ajoutent également des problèmes de corrosion à chaud. Les solutions, développées à partir des techniques des brûleurs à air, consistant à protéger et à refroidir, par une circulation de fluide auxiliaire, le nez des brûleurs se révèlent insuffisantes.

La présente invention a pour objet de proposer une nouvelle structure de brûleur oxycombustible à durée de vie considérablement améliorée, permettant de réduire grandement les risques d'incidents et autorisant des fonctionnements à des températures dépassant largement les 1300°C.

Pour ce faire, selon une caractéristique de l'invention, la partie d'extrémité du brûleur comprend une structure de nez de brûleur en matériaux céramiques formant les parties aval des premier et deuxième canaux et dont l'extrémité est assemblée par des moyens de liaison souple sur une structure support métallique formant une partie amont des premier et deuxième canaux.

Selon des caractéristiques plus particulières de l'invention :
- les premier et second canaux sont concentriques, la structure de nez comportant au moins deux éléments de nez concentriques en matériaux céramiques montés en porte-à-faux sur les extrémités de deux éléments de support métalliques concentriques correspondants ;
- chaque élément de nez est monté par au moins un système de liaison souple sur un élément de support métallique correspondant.

D'autres caractéristiques et avantages de la présente invention ressortiront de la description suivante d'un mode de réalisation, donnée à titre illustratif mais nullement limitatif, faite en relation avec les dessins annexés, sur lesquels :
- la figure 1 est une vue schématique d'une partie d'extrémité de brûleur pour incinérateur de composés chimiques selon un mode de réalisation de l'invention ; et
- la figure 2 est une vue partielle, en coupe longitudinale et à plus grande échelle, d'un système de liaison souple selon un mode de réalisation de l'invention.

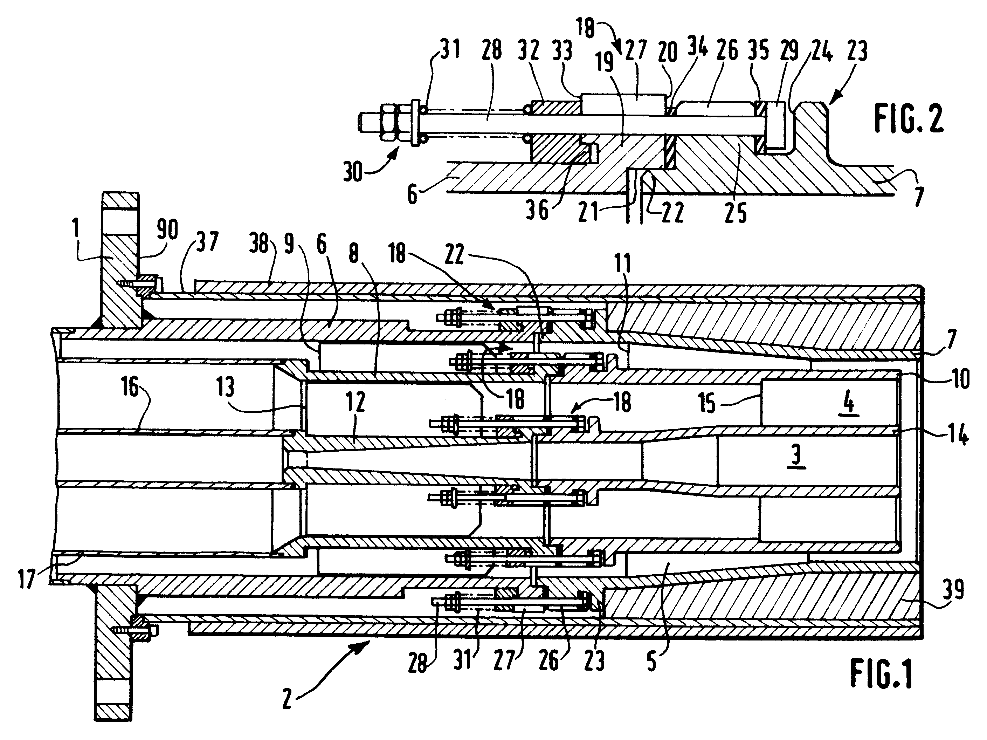

Le brûleur représenté partiellement sur la figure 1 comporte une collerette 1 de montage, avec interposition d'un joint en fibres de carbone 90 du brûleur sur une paroi d'une enceinte de combustion (non représentée) dans laquelle s'étend, en position assemblée, une partie d'extrémité 2 du brûleur par laquelle débouchent, dans le mode de réalisation représenté, un canal central 3 de carburant, par exemple du gaz naturel, un canal annulaire intermédiaire 4 d'oxygène sensiblement pur, et un canal annulaire périphérique 5 de carburant, par exemple de gaz naturel.

La partie d'extrémité 2 du brûleur comporte un élément tubulaire métallique extérieur 6 fixé à la collerette 1 et prolongé par un élément de nez extérieur à profil principal tronconique 7. Les éléments 6 et 7 définissant extérieurement le canal extérieur 5 qui est délimité intérieurement par un élément métallique intermédiaire cylindrique 8, centré dans l'élément 6 par des cloisons ou ailettes radiales 9 et prolongé par un élément de nez annulaire intermédiaire 10, des ailettes 11 de maintien et, éventuellement, d'orientation de flux de gaz étant disposées entre les éléments 7 et 10. Les éléments 8 et 10 délimitent extérieurement le canal intermédiaire 4 qui est délimité intérieurement par un élément métallique central creux 12 positionné dans l'élément support 8 par des cloisons radiales 13 et prolongé par un élément de nez central creux et profilé 14, des ailettes 15 de maintien et d'orientation de flux de gaz étant interposées entre les portions d'extrémité aval des éléments 10 et 14. Les éléments 12 et 14 forment la partie aval, à profils avantageusement multi-divergents, du canal central 3, l'extrémité amont de l'élément 12 étant reliée à une tubulure centrale 16 reliée à une source de gaz (non représentée). De façon similaire, l'extrémité amont de l'élément de support 8 est reliée à une tubulure 17 coaxiale à la tubulure 16 et délimitant les parties amont, reliées à des sources de gaz (non représentées), des canaux 4 et 5.

Selon un aspect de l'invention, alors que les éléments de support 6, 8 et 12 sont en métal, les éléments de nez 7, 10 et 14 sont en matériaux céramiques, rigides, réalisés par exemple par frittage et moulage. Pour compenser les différences de dilatation entre les éléments en métal et en céramique et respecter la relative fragilité mécanique de ces dernières lors de l'assemblage, la liaison entre chaque élément de nez et l'élément de support correspondant est assurée par un système de liaison souple. Dans l'exemple représenté, le système de liaison souple est constitué par une pluralité de liaisons élastiques 18 permettant un montage en appui axial, avec liberté de déplacement relatif axial de chaque élément de nez sur l'élément de support correspondant.

Comme on le voit mieux sur la figure 2, chaque élément de support (en l'occurrence l'élément extérieur 6) comporte à son extrémité aval ou distale une collerette 19 formant une face annulaire radiale d'extrémité 20 et un logement cylindrique axial intérieur 21 recevant l'extrémité tubulaire amont 22 de l'élément de nez associé (7). En avant de l'extrémité 22, l'élément de nez (7) comporte une collerette s'étendant radialement vers l'extérieur 23 creusée par une gorge annulaire 24 de façon à former une partie de collerette arrière 25 comportant une face avant annulaire radiale en vis-à-vis de la face annulaire radiale d'extrémité 20 de l'élément de support 6. La partie de collerette 25 et la collerette 19 sont formées, à leur périphérie, avec des rainures axiales angulairement réparties 26, 27, respectivement, formant logement pour un tirant 28 comportant une tête 29, reçue dans la gorge 24 de l'élément de nez, et une extrémité opposée (amont) filetée pour recevoir des écrous 30 de réglage de la compression d'un ressort 31 interposé entre les écrous 30 et une pièce d'appui 32 traversée par le tirant 28 et venant en appui, sous l'effet du ressort 31, contre la face arrière annulaire 33 de la collerette 19. Selon un aspect de l'invention un joint en feutre de fibres céramiques 34 est interposé entre les faces annulaires en regard des collerettes 19 et 25. Avantageusement, un insert isolant 35 en matériau céramique est également interposé entre la tête 29 du tirant 28 et la face en regard de la partie de collerette 25. Pour assurer le maintien en place du tirant 28, la pièce d'appui 32 comporte avantageusement une saillie inférieure s'étendant vers l'avant 36 reçue dans un évidement annulaire formé à la base de la partie arrière de la collerette 19 de l'élément de support 6. La dimension axiale des éléments de nez 7, 10, 14 est déterminée de façon à reporter la liaison, par les systèmes de liaison souple 18, avec les pièces de support métallique dans une zone de la pièce d'extrémité du brûleur où la température est moins élevée qu'au niveau du débouché des éléments de nez. Avantageusement, pour protéger efficacement les systèmes de liaison 18 des éléments périphériques 6 et 7, et mieux isoler thermiquement ces derniers et l'ensemble des éléments métalliques de support, la partie d'extrémité 2 comporte un capot tubulaire périphérique métallique 37 fixé par sa partie amont à la collerette de montage 1 de façon à s'étendre axialement, radialement à distance de l'élément de support métallique extérieur 6, et pourvu extérieurement d'un revêtement 38 en fibres céramiques. D'autre part, l'espace entre la périphérie de l'élément de nez extérieur 7 et le capot tubulaire 37 est rempli par un bloc fourreau annulaire 39 en feutre de fibres céramiques.

Les éléments métalliques de la partie d'extrémité 2 sont constitués avantageusement en Hastelloy B, Hastelloy C 276 ou Inconel et les éléments en céramique sont constitués de céramique à base de carbure de silicium, de nitrure de silicium ou d'alumine. Les dimensions maximales des éléments de nez en céramique peuvent atteindre un diamètre de l'ordre de 300 mm et une longueur de l'ordre de 400 mm pour des brûleurs d'une puissance efficace pouvant atteindre 30 MW.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art, dans le cadre des revendications ci-après.

## Revendications

1. Brûleur oxycombustible définissant au moins un premier canal (4) pour le passage d'oxygène et au moins un deuxième canal (3) pour le passage d'un carburant, les premier et deuxième canaux débouchant dans une partie d'extrémité (2) du brûleur destinée à s'étendre dans une enceinte de combustion, caractérisé en ce que la partie d'extrémité (2) comprend une structure de nez de brûleur (7, 10, 14) en matériaux céramiques formant les parties aval des premier (4) et deuxième (3) canaux et dont l'extrémité amont est assemblée par des moyens de liaison souple (18) sur une structure support métallique (6, 8, 12) formant une partie amont des premier et deuxième canaux.

2. Brûleur selon la revendication 1, caractérisé en ce que les premier (4) et deuxième (3) canaux sont concentriques, la structure de nez comportant au moins deux éléments de nez concentriques en céramique (7, 10, 14) montés sur les extrémités de deux éléments de support métalliques concentriques correspondants (6, 8, 12).

3. Brûleur selon la revendication 2, caractérisé en ce que chaque élément de nez (7, 10, 14) est monté par au moins un système de liaison souple (18) sur un élément de support métallique correspondant (6, 8, 12).

4. Brûleur selon la revendication 3, caractérisé en ce que l'extrémité amont (22, 25) de chaque élément de nez est montée en appui axial sur une extrémité distale (19) de l'élément de support métallique correspondant (6, 8, 12).

5. Brûleur selon la revendication 4, caractérisé en ce qu'un joint en fibres céramiques (34) est interposé entre l'extrémité amont (22, 25) d'un élément de nez et l'extrémité distale (19) de l'élément de support correspondant.

6. Brûleur selon l'une des revendications 4 et 5, caractérisé en ce que le système de liaison souple (18) comporte un organe élastique (31) sollicitant en appui axial l'extrémité amont (25) de l'élément de nez sur l'extrémité distale (19) de l'élément de support correspondant.

7. Brûleur selon la revendication 6, caractérisé en ce que le système de liaison souple comprend un tirant (28) reçu dans des rainures axiales (27, 26) formées dans des collerettes périphériques (19, 25) des extrémités distale et amont, respectivement, définissant des faces opposées d'appui pour le tirant et pour l'organe élastique (31) porté par le tirant.

8. Brûleur selon la revendication 7, caractérisé en ce que l'organe élastique (31) est disposé du côté du tirant (28) opposé à l'élément de nez céramique.

9. Brûleur selon la revendication 8, caractérisé en ce qu'un élément isolant en matériau céramique (35) est interposé entre la face d'appui de la collerette (25) de l'élément de nez et une tête (29) du tirant (28).

10. Brûleur selon l'une des revendications 2 à 9, caractérisé en ce qu'il comporte un canal central (3) et un canal extérieur (5) de carburant séparés par au moins un canal d'oxygène (4).

11. Brûleur selon l'une des revendications 2 à 10, caractérisé en ce que l'élément de nez extérieur est entouré par un fourreau (39) en fibres céramiques.

12. Brûleur selon l'une des revendications précédentes, caractérisé en ce que la partie d'extrémité (2) est entourée par un capot métallique (37) pourvu d'un revêtement extérieur (38) en fibres de céramique.

13. Brûleur selon la revendication 12, caractérisé en ce que le capot métallique (37) est monté, par son extrémité amont, sur une collerette (1) de montage du brûleur sur une paroi de l'enceinte de combustion et s'étend à distance, radialement, de la périphérie de l'élément de support extérieur (6).

14. Brûleur selon l'une des revendications précédentes, caractérisé en ce que les matériaux céramiques sont à base d'alumine, de carbure de silicium ou de nitrure de silicium.
